# EUROPEAN PATENT APPLICATION

(11) **EP 4 848 199 A1**
(43) Date of publication of application: **02.12.2026**
(21) Application number: 25217632.6
(22) Date of filing: 21.11.2025
(51) Int. Cl.: G06T 5/60, G06T 5/73, G06T 7/90, G06V 20/40, G06V 40/16, G06V 10/82

(54) **ADAPTIVE EMOTION-BASED CAMERA ISP TUNING**

(30) Priority: 30.05.2025 US 202519223328
(71) Applicant: INTEL Corporation, Santa Clara, CA 95054 (US)
(72) Inventor: ZATZARINNI, Rony, Tel Aviv (IL); GROSS, Chaim, 9387826 Jerusalem (IL); BARBER, Dor, Herzliya (IL)
(74) Representative: Viering, Jentschura & Partner mbB Patent- und Rechtsanwälte

(57) **Abstract**

Systems and methods for adaptive emotion-based image signal processor parameter tuning. A neural network is provided to detect the emotional context of a scene. The neural network can identify facial micro expressions of a person in the scene and tune the ISP parameters based on detected emotional cues. The mood of a scene can also be extracted by analyzing a transcription of the conversation using a natural language processing model. Adaptive emotion-based camera ISP tuning can be added as a software component. The ISP tuning system can process an image, classify the emotion of the scene in the image using a deep neural network, and dynamically adjust the ISP parameters to convey the mood of the scene. ISP parameters for ISP blocks such as a tone mapping block, a color correction matrix block, and a sharpening block can be dynamically adjusted based on the mood of the scene.

## Description

### Technical Field

This disclosure relates generally to image processing, and in particular to image processing based on emotional context.

### Background

In films and theater, colors of a scene are used to evoke audience emotions. For example, bright, saturated colors typically convey joy or excitement, and darker, more desaturated colors typically convey a negative mood. In the production of shows and movies, color and lighting effects are used to create a desired atmosphere. Image signal processors are generally tuned to generate visually pleasing videos but do not convey nuances of a scene through the visual appearance of the image.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIGS. 1A-1B are block diagrams of example image processing systems, in accordance with various embodiments.
FIGS. 2A-2C illustrate examples of images and corresponding emotional context scores, in accordance with various embodiments.
FIGS. 3A-3B illustrates examples of images processed based on emotional context scores, in accordance with various embodiments.
FIG. 4 is a flowchart showing a method for adaptive emotion-based camera image signal processor (ISP) tuning, in accordance with various embodiments.
FIG. 5 is a block diagram of an example deep neural network (DNN) system, in accordance with various embodiments.
FIG. 6 is a block diagram of an example computing device, in accordance with various embodiments.

### Detailed Description

### Overview

The colors, tone, vibrancy, brightness, shadows, and other image qualities can convey the mood of an image. For example, bright, vibrant, saturated colors can be used to convey happiness, excitement, and an overall cheerful, uplifting atmosphere. Similarly, dark, desaturated, and muted colors can be used to convey a sad or negative atmosphere. In the production of shows and movies, colors and lighting are often adjusted in post-processing to create a desired atmosphere. As provided herein, similar effects can be integrated into a camera's image signal processor (ISP) to create more engaging and cinematic videos.

ISPs are generally tuned to generate visually pleasing videos but do not convey the emotional or contextual nuances of a scene through the video's visual appearance. In contrast, movies use carefully chosen color palettes and effects to evoke a specific mood and immerse viewers in each scene. Systems and methods are provided herein to provide these cinematic principles to videos and real-time conference calls by integrating a machine learning module in an image processing system to detect emotional cues and dynamically adjust the ISP parameters to deliver richer, more engaging video on standard ISP hardware. The system integrates emotion-based scene tuning into a standard camera ISP workflow. The system is primarily software-driven, with no modifications to existing hardware. At a high level, the system processes the camera's raw data, classifies the emotion of the scene using a deep neural network, and then dynamically adjusts the ISP parameters to convey the mood of the scene.

Thus, according to various aspects, systems and methods are provided herein for a neural network configured to detect the emotional context of a scene and software to adjust ISP parameters in accordance with the detected emotional context. In various implementations, the neural network can identify facial micro expressions of a person in the scene and tune the ISP parameters based on detected emotional cues. In some examples, the mood of a scene can be extracted by analyzing the transcription of the conversation using a natural language processing model.

In traditional systems, emotion-based transformations can be applied as post-processing in software, consuming high amounts of power and system processing resources on images that have already been processed by the ISP. In contrast, the systems and methods provided herein perform emotion detection in low frequency and perform transformations at the ISP. In particular, as discussed herein, adaptive emotion-based camera ISP tuning can be implemented using a camera's standard ISP without additional post-processing. In some examples, adaptive emotion-based camera ISP tuning can be added as a software component. In particular, in various implementations, an adaptive emotion-based camera ISP tuning system processes a portion of the camera's raw image data, classifies the emotion of the scene in the raw image data using a deep neural network, and dynamically adjusts the ISP parameters to convey the mood of the scene. In some examples, the mood detected in a first frame is used to adjust ISP parameters for multiple subsequent frames. Using a camera's standard ISP allows adaptive emotion-based camera ISP tuning to be performed in real-time on user devices such as mobile phones, tablets, and laptops.

To convey the mood of the scene, ISP blocks such as a tone mapping block, a color correction matrix (CCM) block, and a sharpening block can be used. In particular, ISP parameters used in the various ISP blocks can be dynamically adjusted based on the mood of the scene. The tone mapping block adjusts the brightness of high dynamic range images, and can be used to balance bright and dark regions in the image and/or adjust the overall brightness/darkness of the image to alter the scene's corresponding emotion. The CCM block adjusts how each primary color channel is rendered, effectively shifting the color palette, and the CCM block can be calibrated to boost or suppress specific hues according to the desired emotional tone. The sharpening block enhances the definition of edges in an image, and the sharpening strength can be adjusted to create a crisper or a softer image.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example Adaptive Emotion-Based ISP Tuning System

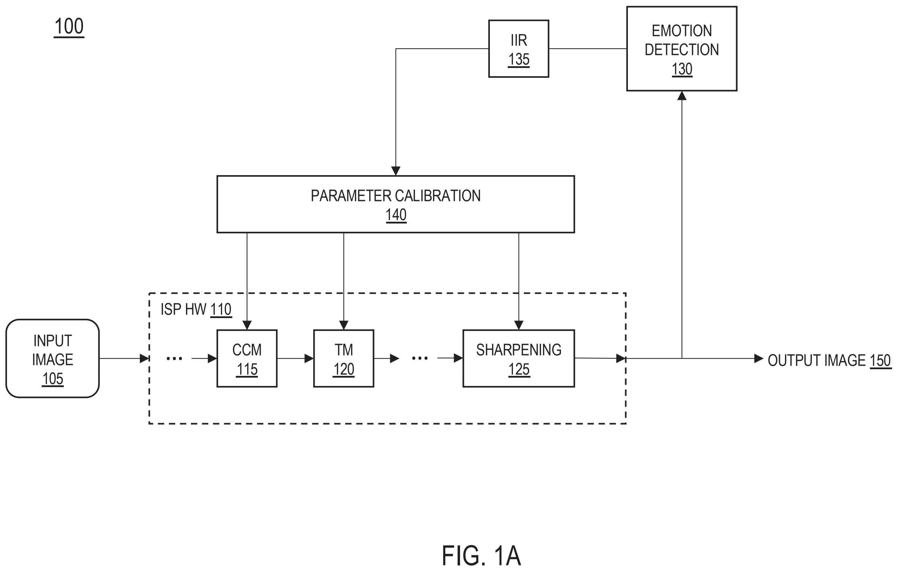

FIG. 1A is a block diagram of an example image processing system 100. The image processing system 100 includes ISP hardware 110, an emotion detection module 130, an infinite impulse response (IIR) block 135, and a parameter calibration module 140. The ISP 100 receives an input image 105 and outputs a processing output image 150. In particular, an image is captured at an image sensor and the image is input to an ISP 110. The ISP processes the image and outputs an output image 150.

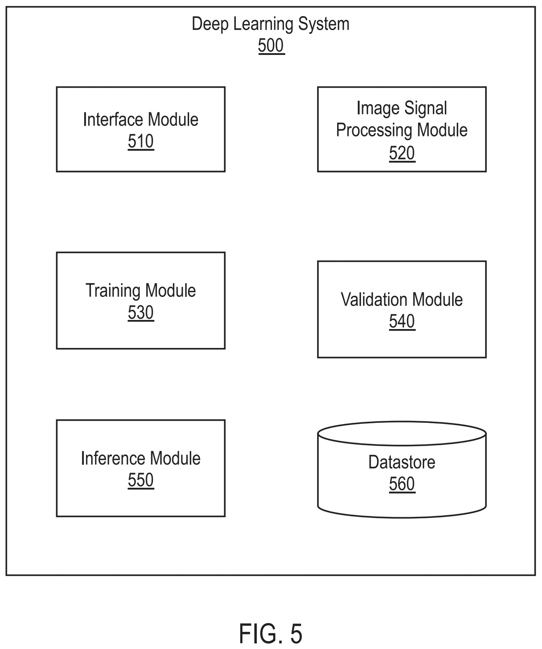

The output image 150 is input to an emotion detection module 130 for emotion classification. The emotion detection module 130 classifies the emotion of the main and/or dominant person. In some examples, the emotion detection module 130 is a neural network, such as a deep neural network. In some examples, the emotion detection module 130 is a deep neural network such as the neural network 500 in FIG. 5. In some examples, the emotion detection module 130 is based on a MobileNet architecture. The emotion detection module 130 architecture is a lightweight architecture that can run quickly and without significantly affecting the image pipeline speed. The emotion detection module 130 can identify facial micro expressions of a person in the scene and tune the ISP parameters based on detected emotional cues. In some examples, the emotion detection module 130 classifies the image based on one of two emotions: positive or negative, and outputs a probability of the image belonging in one of these classes. In some examples, the emotion detection module 130 classifies the image along a sliding scale between negative to positive emotion. In some examples, the emotion detection module 130, the emotion detection module 130 classifies the image into one of more than two emotions. The classes of emotions can include any selected emotions, such as happiness, excitement, sadness, confusion, anger, embarrassment, disappointment, and so on.

In some examples, the ISP 110 includes a face parser, which identifies a main and/or dominant person in the image, and crops the image to output a face crop image of the main person in the image for input to the emotion detection module 130. The emotion detection module 130 detects key points in the face of the face crop image and identifies micro expressions based on the spatial relations between these key points of the face.

In the example in which the emotion detection module 130 classifies the image into one of two emotions (positive or negative), the emotion detection module 130 outputs a soft classification to positive/negative mood in a scene. In various examples, the soft classification is a number between 0 and 1, where values close to 1 indicate a positive emotion in the scene with high probability while values close to 0 indicate negative emotions with high probability. In some examples, the emotion detection module 130 can be trained on a training dataset including images with faces expressing various emotions, with each image labeled according to the expressed emotion. In some examples, the emotion detection module 130 can be trained using the opensource FER+ dataset. In some examples, the emotions included in a training dataset that includes labeled emotions can be classified into two groups: positive and negative. In some examples, more than two classifications can be included. For example a matrix of emotion classifications can be used. Since emotions change slowly over time, the emotion detection module 130 can run once per a selected number of frames in the video, such as once per ten frames, once per fifty frames, or once per one hundred frames.

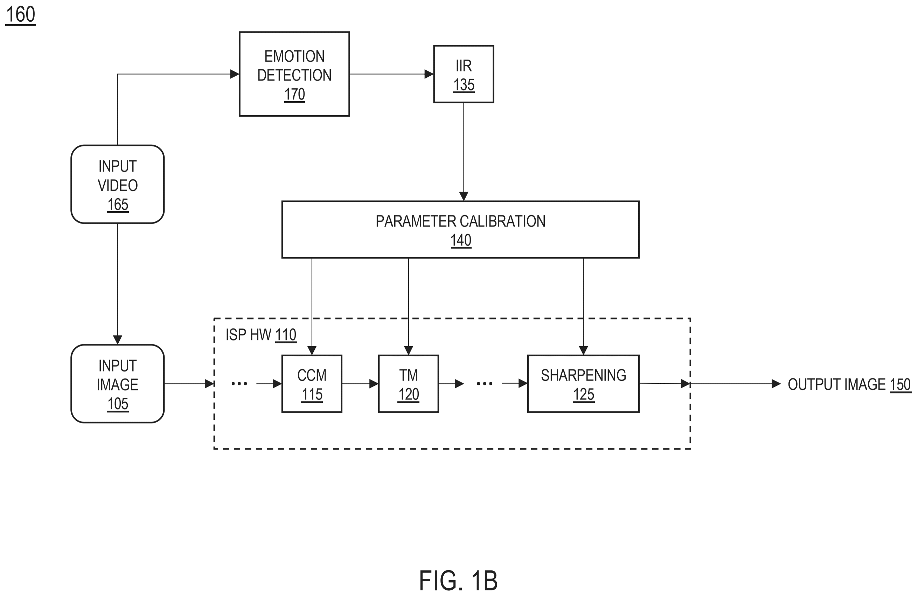

FIG. 1B is a block diagram of an example image processing system 160. The image processing system 160 includes the ISP hardware 110, an emotion detection module 170, the IIR filter block 135, and the parameter calibration module 140. Instead of using the emotion detection module 130 to analyze a face in an image and determine an emotion and/or mood, the image processing system 160 analyzes the conversation to detect emotion and/or mood. In some implementations, the emotion detection module 170 uses a natural language processor (NLP) model to analyze a transcription of the conversation occurring during a video and identify emotions and/or mood based on the transcription. In some examples, the output from the NLP model is input to the IIR module.

As shown in both FIGS. 1A and 1B, the output from the emotion detection modules 130, 170 are input to an IIR filter 135. The IIR filter can prevent fluctuations in the ISP parameters, allowing for smoother frame-to-frame transitions. In some examples, the IIR filter 135 can output a current smoothed emotion soft classification *xₙ* based on the following equation:${x}_{n} = α ⋅ {x}_{n - 1} + \left(1-α\right) ⋅ {c}_{n}$ where *xₙ* is the current smoothed emotion soft classification, *x*_{*n*-1} is the smoothed classification from the last frame, *cₙ* is the model's raw classification from the current step, and α is a predefined smoothing parameter (*e.g., α* = 0.99).

The IIR filter 135 output is input to the parameter calibration module 140. The parameter calibration module 140 performs updates the parameters of the ISP hardware 110 based on the emotion classification output of the IIR filter 135. The parameters of the ISP hardware 110 can include color correction parameters, tone mapping parameters, sharpening parameters, among others.

The ISP hardware 110 includes a color correction matrix block 115, a tone mapping block 120, and a sharpening block 125. The parameters output from the parameter calibration module 140 can be used to adjust the image processing at the color correction matrix block 115, the tone mapping block 120, the sharpening block 125, and/or other image processing blocks.

In some examples, at the color correction matrix block 115, the rendering of each primary color channel can be adjusted, effectively shifting the color palette. Calibration of the color correction matrix block 115 allows boosting or suppression of specific hues according to the desired emotional tone. For instance, blue and green colors can be emphasized or enhanced for negative scenes, and red and yellow colors can be emphasized or enhanced for positive scenes.

In some examples, at the tone mapping block 120, the appearance of high dynamic range images on a display with a more limited dynamic range can be approximated. Calibration of the tone mapping block 120 allows for brightening and/or darkening various regions in the image according to the desired emotional tone. For instance, darker tones can be used to convey negative emotions and brighter tones can be used to convey positive emotions.

In some examples, at the sharpening block 125, the definition of edges in the image can be adjusted. By adjusting the sharpening strength, the output can be a crisper image or a softer image. Calibration of the sharpening block 125 allows for adjusting the sharpening strength according to the desired emotional tone. For instance, softer edges can be used to convey positive emotions/a positive mood, and crisper edges can be used to convey negative emotions/a negative mood.

According to various implementations, for each of the two moods (negative and positive), the parameter calibration module 140 can have a pre-defined table of parameters. The parameters can be combined using alpha-blending, according to the output *xₙ* of the IIR filter 135. For example, a parameter P can be used to control part of the ISP, and *Pₚ* and *Pₙ* can be the predefined values of P for positive and negative scenes respectively. The final value of P can be determined using the following equation:$P = {x}_{n} ⋅ P + \left(1-{x}_{n}\right) ⋅ {P}_{n}$

Thus, the value of P varies based on the current smoothed emotion soft classification *xₙ* as determined at the emotion detection module 130, 170 and the IIR filter 135.

### Example Adaptive Emotion-Based Image Scoring

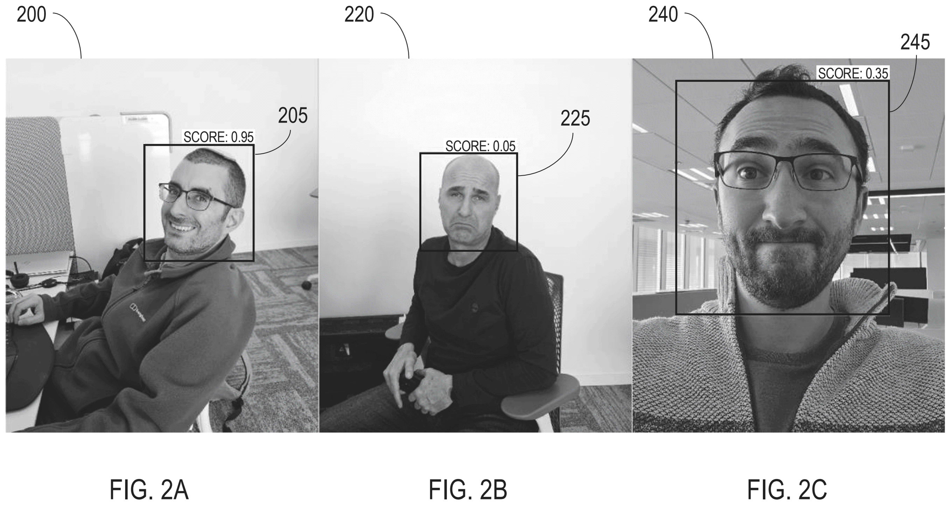

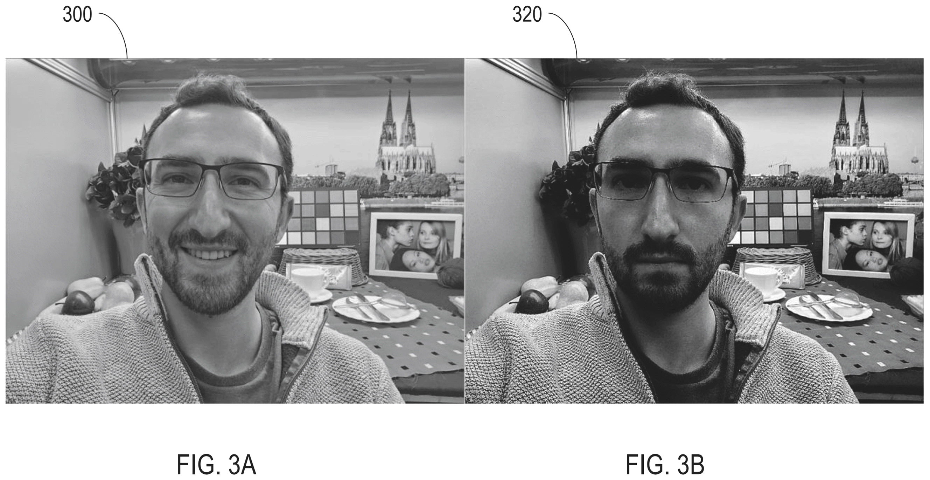

FIGS. 2A-2C and 3A-3B illustrate the result of the image processing system 100 in different scenarios, in accordance with various embodiments. In particular, FIGS. 2A-2C illustrate the scoring of various images, in accordance with various embodiments, and FIGS. 3A-3B illustrate the output image after adjusting for the detected emotions and/or mood of the images, in accordance with various embodiments.

FIG. 2A shows an image 200 of a person who is smiling. The ISP 100 can identify the primary face in the image 200, and output a face crop 205 of the face to the emotion detection module 130. The emotion detection module 130 can detect the emotion of the face, and transmit a raw classification score for the detected emotion to the IIR filter 135. The IIR filter can generate a current smoothed emotion soft classification *xₙ*,which can be the score 0.95 shown in the image 200. The score 0.95 indicates a positive emotion. Based on the score, the image can be adjusted to generate an emotion-based output image indicating the positive emotion.

FIG. 2B shows an image 220 of a person who is frowning. The ISP 100 can identify the primary face in the image 220, and output a face crop 225 of the face to the emotion detection module 130. The emotion detection module 130 can detect the emotion of the face, and transmit a raw classification score for the detected emotion to the IIR filter 135. The IIR filter can generate a current smoothed emotion soft classification *xₙ*, which can be the score 0.05 shown in the image 200. The score 0.95 indicates a negative emotion. Based on the score, the image can be adjusted to generate an emotion-based output image indicating the negative emotion.

FIG. 2C shows an image 240 of a person who looks somewhat skeptical. The ISP 100 can identify the primary face in the image 240, and output a face crop 245 of the face to the emotion detection module 130. The emotion detection module 130 can detect the emotion of the face, and transmit a raw classification score for the detected emotion to the IIR filter 135. The IIR filter can generate a current smoothed emotion soft classification *xₙ,*which can be the score 0.35 shown in the image 240. The score 0.35 indicates a neutral to somewhat negative emotion. Based on the score, the image can be adjusted to generate an emotion-based output image indicating the slightly negative emotion.

In FIGS. 3A and 3B, the image setting is the same except for the facial expression of the person in the picture. FIG. 3A illustrates an output image after adjusting for detected positive emotions and/or mood of the images, in accordance with various embodiments. In particular, as shown in the image 300 of FIG. 3A, the person is smiling, so the ISP 100 detects a positive emotion in the image. Based on a positive emotion score from the emotion detection module 130, the image is adjusted to generate an emotion-based output image indicating the positive emotion. Thus, the output image 300 is bright, vivid, and has softer edges than the input image.

In contrast, FIG. 3B illustrates an output image after adjusting for detected negative emotions and/or mood of the images, in accordance with various embodiments. In particular, as shown in the image 320 of FIG. 3B, the person appears neutral to sad (perhaps grumpy), so the ISP 100 detects a negative emotion in the image. Based on a negative emotion score from the emotion detection module 130, the image is adjusted to generate an emotion-based output image indicating the negative emotion. Thus, the output image 320 is darker, less saturated, and has sharper edges than the input image.

According to various examples, by classifying the emotional tone of a scene, and instantly adjusting ISP parameters, real-time emotion-aware scene calibration provides for a richer and more engaging experience. In some examples, users with various forms of neurodivergence can benefit from the additional cues to indicate the emotion of the person in the video, or on the other end of a real-time video call. Thus, in some examples, adaptive emotion-aware ISP calibration can be a helpful feature to some users during a conference call.

### Example Method for Adaptive Emotion-Based ISP Tuning

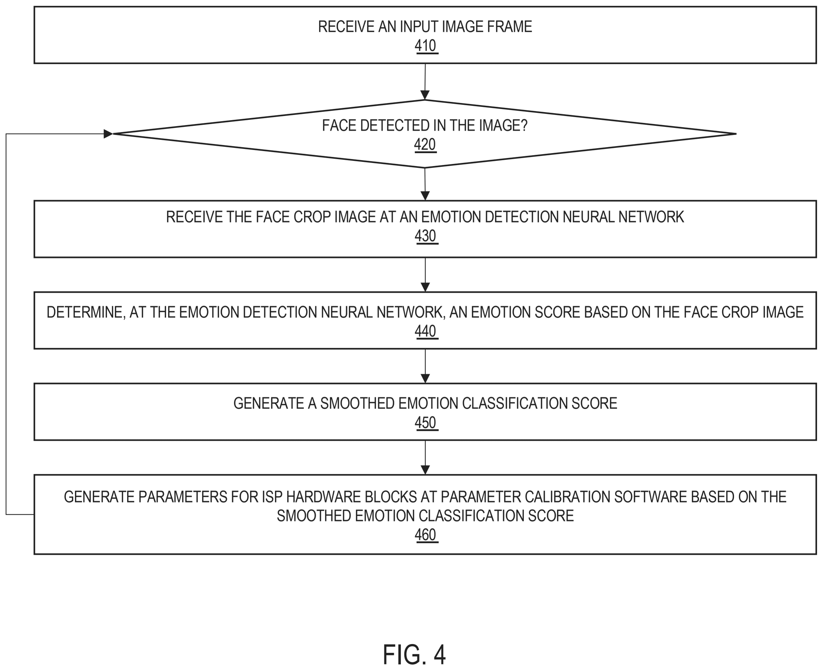

FIG. 4 is a flowchart showing a method for adaptive emotion-based camera ISP tuning, in accordance with various embodiments. The method 400 may be performed by the image processing system 100 of FIG. 1A, the image processing system 160 of FIG. 1B, and/or by the deep learning system 500 in FIG. 5. Although the method 400 is described with reference to the flowchart illustrated in FIG. 4, other methods for adaptive emotion-based camera ISP tuning may alternatively be used. For example, the order of execution of the steps in FIG. 4 may be changed. As another example, some of the steps may be changed, eliminated, or combined.

At 410, an input image frame is received at an image signal processor, such as at the ISP hardware 110. The input image frame can be a frame of an input video stream including multiple image frames. The input image frame can be processed by the ISP hardware according to current ISP parameters.

At 420, is it determined whether there is a face in the input image. When there is more than one face in the input image, a primary face in the input image is identified. The face (or, when there are multiple faces present, the primary face) can be cropped to generate a face crop image.

At 430, the face crop image is received at an emotion detection module, such as the emotion detection module 130. The emotion detection module can be a neural network, such as a deep neural network.

At 440, an emotion score is generated based on the face crop image. In various examples, the emotion detection module can determine the emotion score as described herein. The emotion score can be a numerical score, and/or the emotion score can be a vector and/or matrix of scores. In some examples, the emotion score is based on a scale of negative emotion (score = 0) to positive emotion (score = 1), and the emotion score can fall anywhere between 0 and 1.

At 450, the emotion score is received at an IIR filter, such as the IIR filter 135. The IIR filter can generate a smoothed emotion soft classification for transmission to parameter calibration software. The smoother emotion soft classification can prevent rapid fluctuations in the ISP parameters, allowing for smoother frame-to-frame transitions.

At 460, the smoothed emotion classification score is received at parameter calibration software. The parameter calibration software generates parameters for various ISP hardware blocks. In some examples, the parameter calibration software generate parameters for a color correction matrix block, a tone mapping block, and a sharpening block. The parameters generated by the parameter calibration software are based on the smoothed emotion classification score such that the ISP hardware blocks process the next input image(s) based on the detected emotion. In various examples, the ISP hardware blocks process the next input image(s) to reflect the detected emotion, as discussed herein.

In some examples, the emotion detection module does not generate a new emotion score for every input image frame. Emotions change somewhat gradually, and the emotion score can be re-determined at a selected rate, such as 1 time per second, 2times per second, 10 times per second, or any other selected rate. Similarly, the emotion score can be re-determined once per every 100 received input frames, once per every 20 received input frames, once per every 10 received input frames, or at any other selected rate.

### Example DNN System for Adaptive Emotion-Based ISP Tuning

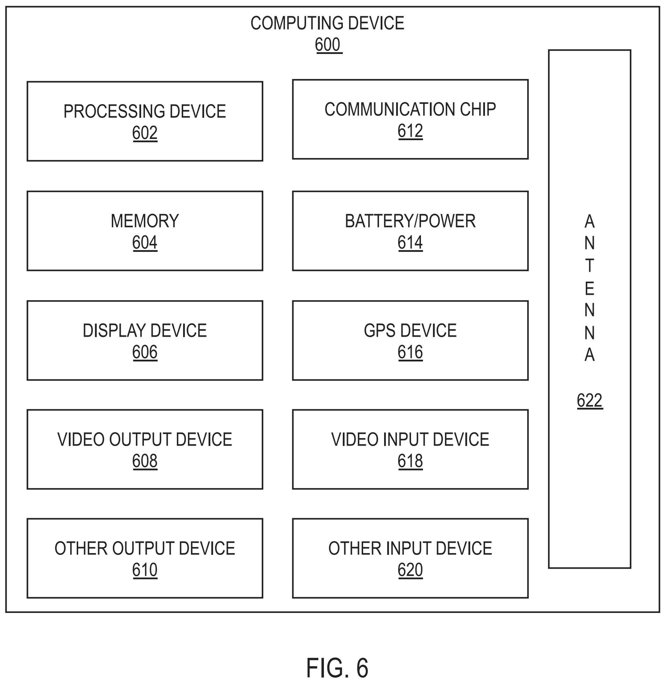

FIG. 5 is a block diagram of an example DNN system 500, in accordance with various embodiments. The DNN system 500 trains DNNs for various tasks, including adaptive emotion-based ISP tuning of images and real-time video streams. The DNN system 500 includes an interface module 510, an ISP module 520, a training module 530, a validation module 540, an inference module 550, and a datastore 560. In other embodiments, alternative configurations, different or additional components may be included in the DNN system 500. Further, functionality attributed to a component of the DNN system 500 may be accomplished by a different component included in the DNN system 500 or a different system. The DNN system 500 or a component of the DNN system 500 (e.g., the training module 530 or inference module 550) may include the computing device 600 in FIG. 6.

The interface module 510 facilitates communications of the DNN system 500 with other systems. As an example, the interface module 510 supports the DNN system 500 to distribute trained DNNs to other systems, e.g., computing devices configured to apply DNNs to perform tasks. As another example, the interface module 510 establishes communications between the DNN system 500 with an external database to receive data that can be used to train DNNs or input into DNNs to perform tasks. In some embodiments, data received by the interface module 510 may have a data structure, such as a matrix. In some embodiments, data received by the interface module 510 may be an image, a series of images, and/or a video stream.

The ISP module 520 can include ISP hardware as well as a neural network that detects emotional cues and generates an emotion score which can be used to dynamically adjust the ISP parameters to provide emotion-based scene tuning. scene. In various examples, the neural network can be an emotion detection module as discussed herein, and generates a soft classification number between 0 and 1, where values close to 1 indicate a positive emotion in the scene with high probability while values close to 0 indicate negative emotions with high probability. The neural network can be trained using the training module 530 and the validation module 540. In some examples, the ISP module includes a natural language processor and processes language in a video to detect emotion and generate an emotion score.

The training module 530 trains DNNs by using training datasets. In some embodiments, a training dataset for training a DNN may include one or more images and/or videos, each of which may be a training sample. In some examples, the training module 530 trains the ISP module 520. The training module 530 may receive real-world video data for processing with the ISP module 520 as described herein. In some embodiments, the training module 530 may input different data into different layers of the DNN. For every subsequent DNN layer, the input data may be less than the previous DNN layer. The training module 530 may adjust internal parameters of the DNN to minimize a difference between the video processed by the DNN. In some examples, the ISP module 520 can be trained with labeled ground truth images. In some examples, the difference between ISP module 520 output frames and the corresponding groundtruth images can be measured as the number of pixels in the corresponding image frames that are different from each other. In some examples, the difference between corresponding image frames can be measured using a loss function.

In some embodiments, a part of the training dataset may be used to initially train the DNN, and the rest of the training dataset may be held back as a validation subset used by the validation module 540 to validate performance of a trained DNN. The portion of the training dataset not including the tuning subset and the validation subset may be used to train the DNN.

The training module 530 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 530 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 530 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 530 defines the architecture of the DNN, the training module 530 inputs a training dataset into the DNN. The training dataset includes a plurality of training samples. An example of a training dataset includes a series of images of a video stream. Unlabeled, real-world video is input to the ISP module, and processed using the ISP module parameters of the DNN to produce two different model-generated outputs: a first time-forward model-generated output and a second time-reversed model-generated output. In the backward pass, the training module 530 modifies the parameters inside the DNN ("internal parameters of the DNN") to minimize the differences between the first model-generated output is and the second model-generated output. The internal parameters include weights of filters in the convolutional layers of the DNN. In some embodiments, the training module 530 uses a cost function to minimize the differences.

The training module 530 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 530 finishes the predetermined number of epochs, the training module 530 may stop updating the parameters in the DNN. The DNN having the updated parameters is referred to as a trained DNN.

The validation module 540 verifies accuracy of trained DNNs. In some embodiments, the validation module 540 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 540 may determine an accuracy score measuring the precision, recall, or a combination of precision and recall of the DNN. The validation module 540 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 540 may compare the accuracy score with a threshold score. In an example where the validation module 540 determines that the accuracy score of the augmented model is lower than the threshold score, the validation module 540 instructs the training module 530 to re-train the DNN. In one embodiment, the training module 530 may iteratively re-train the DNN until the occurrence of a stopping condition, such as the accuracy measurement indication that the DNN may be sufficiently accurate, or a number of training rounds having taken place.

The inference module 550 applies the trained or validated DNN to perform tasks. The inference module 550 may run inference processes of a trained or validated DNN. In some examples, inference makes use of the forward pass to produce model-generated output for unlabeled real-world data. For instance, the inference module 550 may input real-world data into the DNN and receive an output of the DNN. The output of the DNN may provide a solution to the task for which the DNN is trained for.

The inference module 550 may aggregate the outputs of the DNN to generate a final result of the inference process. In some embodiments, the inference module 550 may distribute the DNN to other systems, e.g., computing devices in communication with the DNN system 500, for the other systems to apply the DNN to perform the tasks. The distribution of the DNN may be done through the interface module 510. In some embodiments, the DNN system 500 may be implemented in a server, such as a cloud server, an edge service, and so on. The computing devices may be connected to the DNN system 500 through a network. Examples of the computing devices include edge devices.

The datastore 560 stores data received, generated, used, or otherwise associated with the DNN system 500. For example, the datastore 560 stores video processed by the ISP module 520 or used by the training module 530, validation module 540, and the inference module 550. The datastore 560 may also store other data generated by the training module 530 and validation module 540, such as the hyperparameters for training DNNs, internal parameters of trained DNNs (e.g., values of tunable parameters of activation functions, such as Fractional Adaptive Linear Units (FALUs)), etc. In the embodiment of FIG. 5, the datastore 560 is a component of the DNN system 500. In other embodiments, the datastore 560 may be external to the DNN system 500 and communicate with the DNN system 500 through a network.

In general, an uncalibrated or badly calibrated ISP module would fail to discriminate between similar and dissimilar regions in the frames of the current input and the previous output. Similarly, an uncalibrated or badly calibrated ISP module would fail to discriminate between similar and dissimilar regions in the frames of FIGS. 4A and 4B. When a moving object is blended with the background, a ghost artifact appears in the output frame (i.e., in the output video). In particular, a ghost artifact appears when pixels of the moving foreground object are blended with the background pixels, making the moving object appear transparent. When the current input is blended with the previous output, the ghost artifact trails behind the moving object.

For ISP module training, the input can include an input image frame and a labeled groundtruth ISP-processed image. In various examples, the input image frame is received at an ISP such as the ISP 100 or the ISP module 520. In other examples, the input image frame can be received at the training module 530 or the inference module 550 of FIG. 5. The imager can be a camera, such as a video camera. The input image frame can be a still image from the video camera feed. The input image frame can include a matrix of pixels, each pixel having a color, lightness, and/or other parameter. The input image frame can be face cropped and processed by the emotion detection module, and the input image frame can be simultaneously processed by an image processing pipe. Various steps can be repeated to further adjust the ISP parameters. In some examples, the training can be repeated with a new input image frame and groundtruth ISP-processed image. In some examples, the emotion detection module can be trained using downscaled face crop images and comparing emotion scores to groundtruth emotion scores.

### Example Computing Device

FIG. 6 is a block diagram of an example computing device 600, in accordance with various embodiments. In some embodiments, the computing device 600 may be used for at least part of the deep learning system 500 in FIG. 5 and/or the image processing systems of FIGS. 1A and 1B. A number of components are illustrated in FIG. 6 as included in the computing device 600, but any one or more of these components may be omitted or duplicated, as suitable for the application. In some embodiments, some or all of the components included in the computing device 600 may be attached to one or more motherboards. In some embodiments, some or all of these components are fabricated onto a single system on a chip (SoC) die. Additionally, in various embodiments, the computing device 600 may not include one or more of the components illustrated in FIG. 6, but the computing device 600 may include interface circuitry for coupling to the one or more components. For example, the computing device 600 may not include a display device 606, but may include display device interface circuitry (e.g., a connector and driver circuitry) to which a display device 606 may be coupled. In another set of examples, the computing device 600 may not include a video input device 618 or a video output device 608, but may include video input or output device interface circuitry (e.g., connectors and supporting circuitry) to which a video input device 618 or video output device 608 may be coupled.

The computing device 600 may include a processing device 602 (e.g., one or more processing devices). The processing device 602 processes electronic data from registers and/or memory to transform that electronic data into other electronic data that may be stored in registers and/or memory. The computing device 600 may include a memory 604, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 604 may include memory that shares a die with the processing device 602. In some embodiments, the memory 604 includes one or more non-transitory computer-readable media storing instructions executable for image signal processing, e.g., the method 400 described above in conjunction with FIG. 4 or some operations performed by the DNN system 500 in FIG. 5. The instructions stored in the one or more non-transitory computer-readable media may be executed by the processing device 602.

In some embodiments, the computing device 600 may include a communication chip 612 (e.g., one or more communication chips). For example, the communication chip 612 may be configured for managing wireless communications for the transfer of data to and from the computing device 600. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 612 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 612 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 612 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 612 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 612 may operate in accordance with other wireless protocols in other embodiments. The computing device 600 may include an antenna 622 to facilitate wireless communications and/or to receive other wireless communications (such as AM or FM radio transmissions).

In some embodiments, the communication chip 612 may manage wired communications, such as electrical, optical, or any other suitable communication protocols (e.g., the Ethernet). As noted above, the communication chip 612 may include multiple communication chips. For instance, a first communication chip 612 may be dedicated to shorter-range wireless communications such as Wi-Fi or Bluetooth, and a second communication chip 612 may be dedicated to longer-range wireless communications such as global positioning system (GPS), EDGE, GPRS, CDMA, WiMAX, LTE, EV-DO, or others. In some embodiments, a first communication chip 612 may be dedicated to wireless communications, and a second communication chip 612 may be dedicated to wired communications.

The computing device 600 may include battery/power circuitry 614. The battery/power circuitry 614 may include one or more energy storage devices (e.g., batteries or capacitors) and/or circuitry for coupling components of the computing device 600 to an energy source separate from the computing device 600 (e.g., AC line power).

The computing device 600 may include a display device 606 (or corresponding interface circuitry, as discussed above). The display device 606 may include any visual indicators, such as a heads-up display, a computer monitor, a projector, a touchscreen display, a liquid crystal display (LCD), a light-emitting diode display, or a flat panel display, for example.

The computing device 600 may include a video output device 608 (or corresponding interface circuitry, as discussed above). The video output device 608 may include any device that generates an audible indicator, such as speakers, headsets, or earbuds, for example.

The computing device 600 may include a video input device 618 (or corresponding interface circuitry, as discussed above). The video input device 618 may include any device that generates a signal representative of a sound, such as microphones, microphone arrays, or digital instruments (e.g., instruments having a musical instrument digital interface (MIDI) output).

The computing device 600 may include a GPS device 616 (or corresponding interface circuitry, as discussed above). The GPS device 616 may be in communication with a satellite-based system and may receive a location of the computing device 600, as known in the art.

The computing device 600 may include another output device 610 (or corresponding interface circuitry, as discussed above). Examples of the other output device 610 may include a video codec, a video codec, a printer, a wired or wireless transmitter for providing information to other devices, or an additional storage device.

The computing device 600 may include another input device 620 (or corresponding interface circuitry, as discussed above). Examples of the other input device 620 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 600 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 600 may be any other electronic device that processes data.

### Selected Examples

The following paragraphs provide various examples of the embodiments disclosed herein.

Example 1 provides a computer-implemented method, including receiving an input image; detecting a face in the input image and generating a face crop image; determining, at a neural network, an emotion score for the face in the face crop image based on an emotion of the face; generating parameters for image signal processing hardware based on the emotion score, where the parameters are adjusted to reflect the emotion; and processing the input image at the image signal processing hardware, where processing includes adjusting the image based on the parameters.

Example 2 provides the computer-implemented method according to example 1, where the input image is a first input image frame of an input video, and further including processing a second input image frame at the image signal processing hardware, where processing includes adjusting the image based on the parameters.

Example 3 provides the computer-implemented method according to examples 2 and/or 21, further including generating, at an infinite impulse response block, a smoothed emotion classification score based on the emotion score, and where generating the parameters for the image signal processing hardware includes generating the parameters based on the smoothed emotion classification score.

Example 4 provides the computer-implemented method according to examples 1-3 and/or, where determining the emotion score further includes generating a numerical score between 0 and 1, where 0 indicates a most negative emotion score and 1 indicates a most positive emotion score.

Example 5 provides the computer-implemented method according to example 1-4 and/or 21, where generating parameters for image signal processing hardware based on the emotion score, includes adjusting a selected parameter for at least one image processing block between a positive selected parameter value and a negative selected parameter value.

Example 6 provides the computer-implemented method according to examples 1-5 and/or 21, where processing the input image at the image signal processing hardware includes processing at a color correction matrix to adjust image colors to reflect the emotion.

Example 7 provides the computer-implemented method according to examples 1-6 and/or 21, where processing the input image at the image signal processing hardware includes processing at a tone mapping module to adjust image brightness to reflect the emotion.

Example 8 provides the computer-implemented method according to example 1-7 and/or 21, where processing the input image at the image signal processing hardware includes processing at a sharpening module to adjust a sharpness of edges in the input image to reflect the emotion.

Example 9 provides one or more non-transitory computer-readable media storing instructions executable to perform operations, the operations including receiving an input image; detecting a face in the input image and generating a face crop image; determining, at a neural network, an emotion score for the face in the face crop image based on an emotion of the face; generating parameters for image signal processing hardware based on the emotion score, where the parameters are adjusted to reflect the emotion; and processing the input image at the image signal processing hardware, where processing includes adjusting the image based on the parameters.

Example 10 provides the one or more non-transitory computer-readable media according to example 9, where the input image is a first input image frame of an input video, and the operations further including processing a second input image frame at the image signal processing hardware, where processing includes adjusting the image based on the parameters.

Example 11 provides the one or more non-transitory computer-readable media according to example 10 and/or 22, the operations further including generating, at an infinite impulse response block, a smoothed emotion classification score based on the emotion score, and where generating the parameters for the image signal processing hardware includes generating the parameters based on the smoothed emotion classification score.

Example 12 provides the one or more non-transitory computer-readable media according to example 9-11 and/or 22, where determining the emotion score further includes generating a numerical score between 0 and 1, where 0 indicates a most negative emotion score and 1 indicates a most positive emotion score.

Example 13 provides the one or more non-transitory computer-readable media according to example 9-12 and/or 22, where generating parameters for image signal processing hardware based on the emotion score, includes adjusting a selected parameter for at least one image processing block between a positive selected parameter value and a negative selected parameter value.

Example 14 provides the one or more non-transitory computer-readable media according to example 9-13 and/or 22, where processing the input image at the image signal processing hardware includes processing at a color correction matrix to adjust image colors to reflect the emotion.

Example 15 provides the one or more non-transitory computer-readable media according to example 9-14 and/or 22, where processing the input image at the image signal processing hardware includes processing at a tone mapping module to adjust image brightness to reflect the emotion.

Example 16 provides the one or more non-transitory computer-readable media according to example 9-15 and/or 22, where processing the input image at the image signal processing hardware includes processing at a sharpening module to adjust a sharpness of edges in the input image to reflect the emotion.

Example 17 provides an apparatus, including a computer processor for executing computer program instructions; and a non-transitory computer-readable memory storing computer program instructions executable by the computer processor to perform operations including receiving an input image; detecting a face in the input image and generating a face crop image; determining, at a neural network, an emotion score for the face in the face crop image based on an emotion of the face; generating parameters for image signal processing hardware based on the emotion score, where the parameters are adjusted to reflect the emotion; and processing the input image at the image signal processing hardware, where processing includes adjusting the image based on the parameters.

Example 18 provides the apparatus according to example 17, where the input image is a first input image frame of an input video, and the operations further including processing a second input image frame at the image signal processing hardware, where processing includes adjusting the image based on the parameters.

Example 19 provides the apparatus according to example 18 and/or 23, the operations further including generating, at an infinite impulse response block, a smoothed emotion classification score based on the emotion score, and where generating the parameters for the image signal processing hardware includes generating the parameters based on the smoothed emotion classification score.

Example 20 provides the apparatus according to example 17-19 and/or 23, where processing the input image at the image signal processing hardware includes processing at one or more of: a color correction matrix to adjust image colors to reflect the emotion, a tone mapping module to adjust image brightness to reflect the emotion, and a sharpening module to adjust a sharpness of edges in the input image to reflect the emotion.

Example 21 provides a computer-implemented method, comprising: receiving an input video stream, transcribing speech in an audio portion of the input video stream, determining, at a neural network, an emotion score for the speech based on an emotion of the speech; generating parameters for image signal processing hardware based on the emotion score, wherein the parameters are adjusted to reflect the emotion; and processing the input image at the image signal processing hardware, wherein processing includes adjusting the image based on the parameters.

Example 22 provides one or more non-transitory computer-readable media storing instructions executable to perform operations, the operations including receiving an input video stream, transcribing speech in an audio portion of the input video stream, determining, at a neural network, an emotion score for the speech based on an emotion of the speech; generating parameters for image signal processing hardware based on the emotion score, wherein the parameters are adjusted to reflect the emotion; and processing the input image at the image signal processing hardware, wherein processing includes adjusting the image based on the parameters.

Example 23 provides an apparatus, including a computer processor for executing computer program instructions; and a non-transitory computer-readable memory storing computer program instructions executable by the computer processor to perform operations including receiving an input video stream, transcribing speech in an audio portion of the input video stream, determining, at a neural network, an emotion score for the speech based on an emotion of the speech; generating parameters for image signal processing hardware based on the emotion score, wherein the parameters are adjusted to reflect the emotion; and processing the input image at the image signal processing hardware, wherein processing includes adjusting the image based on the parameters.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:
receiving an input image;
detecting a face in the input image and generating a face crop image;
determining, at a neural network, an emotion score for the face in the face crop image based on an emotion of the face;
generating parameters for image signal processing hardware based on the emotion score, wherein the parameters are adjusted to reflect the emotion; and
processing the input image at the image signal processing hardware, wherein processing includes adjusting the input image based on the parameters.

2. The computer-implemented method according to claim 1, wherein the input image is a first input image frame of an input video, and further comprising processing a second input image frame at the image signal processing hardware, wherein processing includes adjusting the second input image frame based on the parameters.

3. The computer-implemented method according to claim 2, further comprising generating, at an infinite impulse response block, a smoothed emotion classification score based on the emotion score, and wherein generating the parameters for the image signal processing hardware includes generating the parameters based on the smoothed emotion classification score.

4. The computer-implemented method according to claims 1-3, wherein determining the emotion score further comprises generating a numerical score between 0 and 1, wherein 0 indicates a most negative emotion score and 1 indicates a most positive emotion score.

5. The computer-implemented method according to claims 1-4, wherein generating parameters for image signal processing hardware based on the emotion score, includes adjusting a selected parameter for at least one image processing block between a positive selected parameter value and a negative selected parameter value.

6. The computer-implemented method according to claims 1-5, wherein processing the input image at the image signal processing hardware includes processing at a color correction matrix to adjust image colors to reflect the emotion.

7. The computer-implemented method according to claims 1-6, wherein processing the input image at the image signal processing hardware includes processing at a tone mapping module to adjust image brightness to reflect the emotion.

8. The computer-implemented method according to claims 1-7, wherein processing the input image at the image signal processing hardware includes processing at a sharpening module to adjust a sharpness of edges in the input image to reflect the emotion.

9. One or more non-transitory computer-readable media storing instructions executable to perform operations, the operations comprising:
receiving an input image;
detecting a face in the input image and generating a face crop image;
determining, at a neural network, an emotion score for the face in the face crop image based on an emotion of the face;
generating parameters for image signal processing hardware based on the emotion score, wherein the parameters are adjusted to reflect the emotion; and
processing the input image at the image signal processing hardware, wherein processing includes adjusting the input image based on the parameters.

10. The one or more non-transitory computer-readable media according to claim 9, wherein the input image is a first input image frame of an input video, and the operations further comprising processing a second input image frame at the image signal processing hardware, wherein processing includes adjusting the second input image frame based on the parameters.

11. The one or more non-transitory computer-readable media according to claim 10, the operations further comprising generating, at an infinite impulse response block, a smoothed emotion classification score based on the emotion score, and wherein generating the parameters for the image signal processing hardware includes generating the parameters based on the smoothed emotion classification score.

12. An apparatus, comprising:
a computer processor for executing computer program instructions; and
a non-transitory computer-readable memory storing computer program instructions executable by the computer processor to perform operations comprising:
receiving an input image;
detecting a face in the input image and generating a face crop image;
determining, at a neural network, an emotion score for the face in the face crop image based on an emotion of the face;
generating parameters for image signal processing hardware based on the emotion score, wherein the parameters are adjusted to reflect the emotion; and
processing the input image at the image signal processing hardware, wherein processing includes adjusting the input image based on the parameters.

13. The apparatus according to claim 12, wherein the input image is a first input image frame of an input video, and the operations further comprising processing a second input image frame at the image signal processing hardware, wherein processing includes adjusting the second input image frame based on the parameters.

14. The apparatus according to claim 13, the operations further comprising generating, at an infinite impulse response block, a smoothed emotion classification score based on the emotion score, and wherein generating the parameters for the image signal processing hardware includes generating the parameters based on the smoothed emotion classification score.

15. The apparatus according to claims 12-14, wherein processing the input image at the image signal processing hardware includes processing at one or more of: a color correction matrix to adjust image colors to reflect the emotion, a tone mapping module to adjust image brightness to reflect the emotion, and a sharpening module to adjust a sharpness of edges in the input image to reflect the emotion.
